Europäisches Patentamt

European Patent Office

Office européen des brevets

(11) Publication number: **0 082 797**
A2

## EUROPEAN PATENT APPLICATION

(21) Application number: 82630113.7

(22) Date of filing: 07.12.82

(51) Int. Cl.³: **F 16 D 3/72**

(30) Priority: 22.12.81 US 333539

(43) Date of publication of application:
29.06.83 Bulletin 83/26

(84) Designated Contracting States:
BE CH DE FR GB IT LI NL SE

(71) Applicant: REXNORD INC.
P.O. Box 2022
Milwaukee, Wisconsin 53201(US)

(72) Inventor: Fredericks, Walter A.
15 Herron Court
Warren, PA 16365(US)

(74) Representative: Weydert, Robert et al,
Office Dennemeyer S.à.r.l. 21-25 Allée Scheffer P.O. Box 41
Luxembourg(LU)

(54) Double-flexing coupling in a parallel arrangement.

(57) A flexible torque transmission coupling, comprising a driving member (12), a rigid center member (14), and a driven member (16) aligned on a longitudinal axis (18). A plurality of flexible elements (24, 26, 28, 30) is located between the driving and the driven members, each flexible element being symmetrical about the longitudinal axis. At least two of the flexible elements (24, 26) are coupled in parallel between the center member and either the driving or the driven hubs, and at least one of the flexible elements (28) is coupled between the center member and the other hub.

FIG. 1

## DOUBLE-FLEXING COUPLING IN A PARALLEL ARRANGEMENT.

There are several different flexible couplings that have been used in the past to connect two shafts so that torque is transmitted between the shafts. The couplings can be divided into two general types: first, the mechanical flexing couplings and, second, material flexing couplings. Mechanical flexing couplings provide flexibility by allowing the components to slide or move relative to each other. Mechanical flexing couplings generally permit greater axial misalignment between shafts than do material flexing couplings; however, there are several problems associated with them. For example, mechanical flexing couplings usually require lubrication due to the frictional sliding motion involved. Some amount of clearance between mating gear teeth is always required in the gear couplings, both in the interest of manufacturing tolerances and to allow for lubrication; this means that there will be torsional backlash as well as some lack of radial and angular rigidity.

The material flexing group provides flexibility by having certain parts designed to flex. These flexing elements can be of various materials, such as metal, rubber, or plastic. Couplings of this type generally must be operated within the fatigue limits of the material of the flexing element. Most metals have a predictable fatigue limit and permit the establishment of definite boundaries of operation. Elastomers (rubber, plastic, etc.) usually do not have a well-defined fatigue limit, and service life is determined primarily by the operational conditions. The material flexing group includes laminated-disk, diaphragm, spring, and elastomer couplings.

The material flexing couplings overcome many of the problems associated with the mechanical flexing couplings. They do not require lubrication and have no backlash. The principle of a material flexing shaft coupling is that a flexible member is inserted between the shafts to permit some misalignment between the rigid members. For example, a single flexing coupling may consist of a flexible disc which is connected to two hubs. The flexibility of the disc permits one hub to drive the other, even though the hubs are at an angle to each other. However, a single flexing coupling can only accept one angle of misalignment. It is quite common to encounter two angles of misalignment, for example, when the shafts lie in parallel planes. In this case, a double-flexing coupling is required.

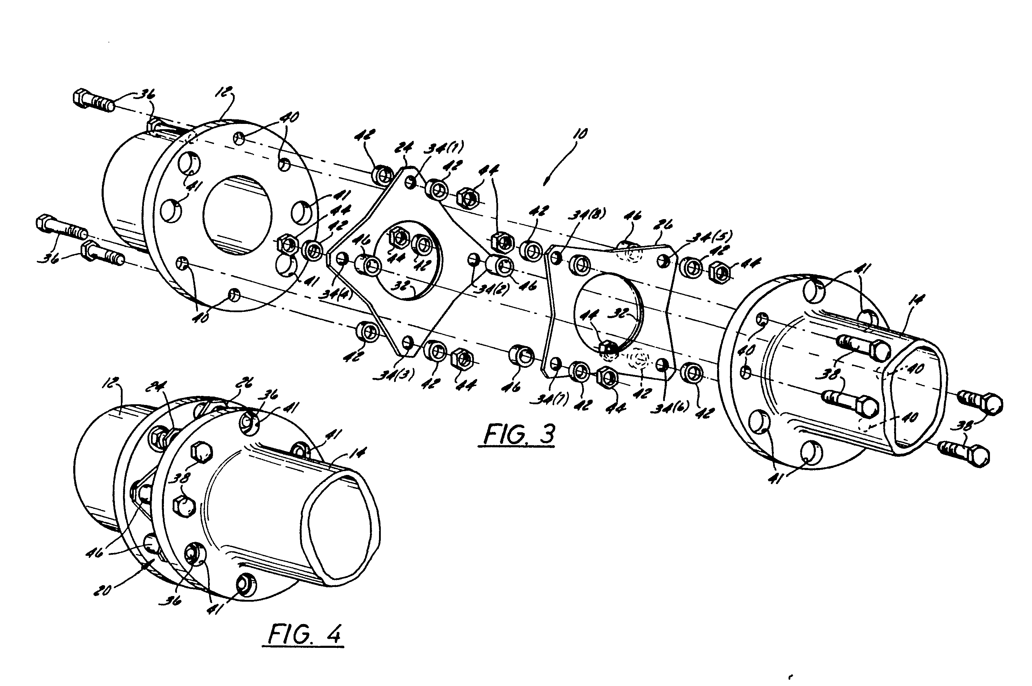

U.S. Patent No. 4,196,597 "Robinson", hereby incorporated by reference, shows a material flexing shaft coupling using axially spaced diaphragms. Referring to Figure 2 of Robinson, it can be seen that the flexible diaphragms are connected in series. By connection in series is meant that each flexible element bears the total torsional load that is transmitted through the coupling. In Robinson, each diaphragm has inner and outer rings of bolts, and torque is transmitted from the inner ring of one diaphragm, through the diaphragm to its outer ring, then to the outer ring of the next diaphragm, through that diaphragm to its inner ring and so forth. This coupling permits substantial misalignment. However, it is large, complicated, contains many pieces, and is expensive to manufacture. Furthermore, parts of the flexible elements are hidden, so that failure of a flexible element is difficult to detect.

U.S. Patent No. 4,055,966 "Fredericks", hereby incorporated by reference, discloses another type of double-flexing coupling. In this coupling, the flexible elements have a single ring of bolt holes. Each flexible element is alternately bolted to its hub and to the center member, so that torque is transmitted from one hub through the flexible member to the center member, then through the second flexible member to the second hub. This is a much simpler coupling than that shown in Robinson above. Also, the flexible elements are not hidden, thereby making it easy to visually detect failure in the flexible elements. This construction also occupies less space than the construction shown in Robinson, which is often an important consideration due to space limitations. Unfortunately, however, the coupling shown in Fredericks does not permit large amounts of axial misalignment.

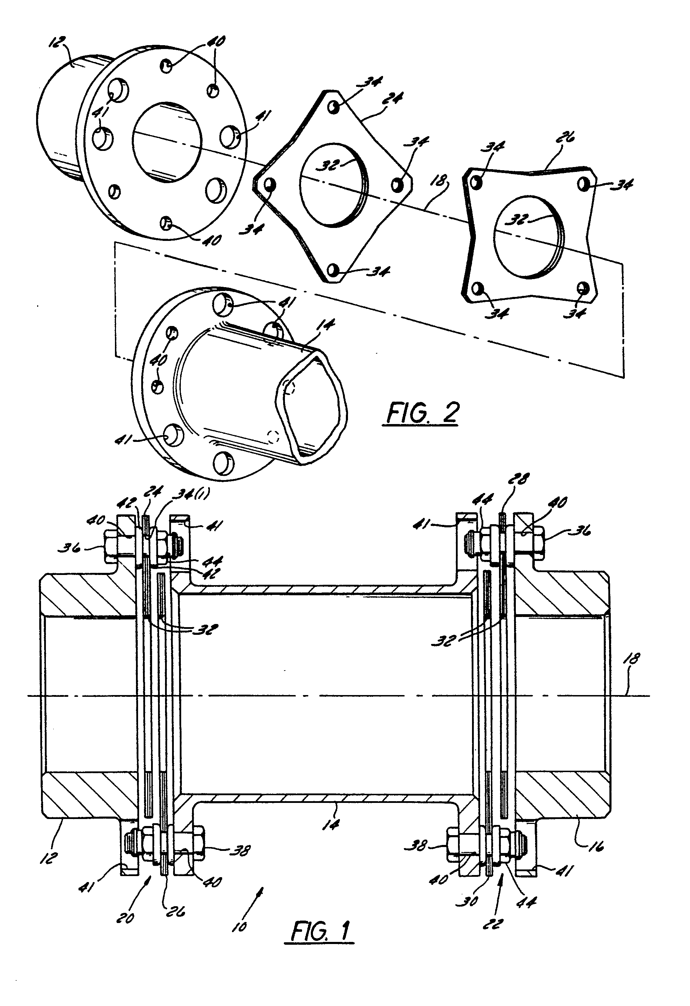

The logical method for adding greater misalignment capabilities to the coupling shown in Fredericks, according to those skilled in the art, is to increase the number of flexible elements, with all the flexible elements connected in series so that each carries the entire torsional load of the coupling. For example, if a second center member and a second set of flexible elements were added to the coupling in Figure 1 of Fredericks, so that torque was transmitted from the first hub through the first set of flexible elements to the first center member, then through the second set of flexible elements to the second center member, then through the third set of flexible elements to the second hub, the new coupling would permit greater radial and axial misalignment. However, this "triple-flexing" coupling would be unstable, with the center portion of the coupling tending to be thrown out due to centrifugal force.

The main object of the present invention is to provide a simple, compact, radially stable flexible disc coupling for high speed. high torque applications which permits substantially greater misalignment than the double-flexing disc couplings of the prior art.

This object is accomplished in one embodiment of the invention by replacing the single disc packs of the existing double-flexing disc couplings with a plurality of disc packs connected in parallel. By "parallel" is meant that each disc pack is separately connected to its hub and to the center member, so that each disc pack carries a fraction of the total torque that is transmitted between its hub and the center member. Because each disc pack transmits less torque, the bolts connecting the disc packs to their hub and to the center member can be spaced further apart, so the discs are able to flex more, thereby permitting greater misalignment.

A more thorough understanding of the present invention will be gained by reading the following description of the preferred embodiments with reference to the accompanying drawings in which:

Figure 1 is a side-sectional view of a coupling made in accordance with the present invention.

Figure 2 is an exploded perspective view of the left half of the coupling shown in Figure 1, omitting the nuts, bolts and spacers.

Figure 3 is an exploded perspective view of the left half of the coupling shown in Figure 1.

Figure 4 is a perspective view of the left half of the assembled coupling shown in Figure 1.

Figure 5 is a side-sectional view of the right half of the coupling shown in Figure 1.

Figure 6 is an end view of the coupling shown in Figure 1.

Figure 7 is an end view of the flexing elements 24, 26 of Figure 1.

Figure 8 is a partially broken-away side-sectional view of a second embodiment of a coupling made in accordance with the present invention.

Figure 9 is a broken-away exploded perspective view of a third embodiment of a coupling made in accordance with the present invention, with the bolts, nuts and spacers omitted.

Figure 10 is an end view of the coupling shown in Figure 9.

Figure 11 is an end view of the flexing elements 24b, 25b and 26b shown in Figure 9.

Figure 12 is an exploded perspective view partially broken-away of a fourth embodiment of a coupling made in accordance with the present invention, omitting the nuts, bolts and spacers.

Figure 13 is an end view of the flexing elements 24c and 26c shown in Figure 12.

Figure 14 is an end view of the coupling shown in Figure 12.

Figure 15 is an exploded perspective view partially broken-away of a fifth embodiment of a coupling made in accordance with the present invention, with the nuts, bolts and spacers omitted.

Figure 16 is an end view of the flexing elements 24d and 26d shown in Figure 15.

Figure 17 is an end view of the coupling shown in Figure 15.

Figure 18 is an exploded perspective view partially broken-away of a sixth embodiment of a coupling made in accordance with the present invention, with the nuts, bolts and spacers omitted.

Figure 19 is an end view of the flexing elements 24e and 26e shown in Figure 18.

Figure 20 is an end view of the coupling shown in Figure 18.

Figure 21 is a side-sectional view of a seventh embodiment of a coupling made in accordance with the present invention.

Figure 22 is a perspective view of a sandwich unit 50 from Figure 21.

Figure 23 is a side-sectional view of an eight embodiment of a coupling made in accordance with the present invention.

Figure 24 is an end view of the flexible elements 24g, 26g of Figure 23.

Figure 25 is an exploded perspective view partially broken-away of the hub 12g and the beams 58 of the left portion of the coupling shown in Figure 23.

Figure 1 shows a double-flexing coupling 10 having a first hub 12, a rigid center member 14 and a second hub 16. The hubs 12, 16 and center member 14 are all aligned on a longitudinal axis 18. The hubs 12, 16 shown here are cylindrically shaped with a flanged end, but anything which permits rigid connection to the shaft could be used in their place. For example, sometimes the end of the shaft is upset to provide a flange onto which to bolt. In that case, the end of the shaft itself would serve as the hub. Other adaptors which serve as hubs are also known to those skilled in the art. The center member 14 is shown here as being cylindrically shaped with a flange at each end. This is the common shape of a center member. However, it is possible for a single rigid plate or disc to serve as a center member. Some other center members are also obvious to one skilled in the art.

A first group of flexible elements 20 is located between the first hub 12 and the center member 14. Similarly, a second group of flexible elements 22 is located between the center member 14 and the second hub 16. The first group of flexible elements 20 is made up of two separate flexible elements 24, 26. Each flexible element 24, 26 is symmetrical about the axis 18, and the flexible elements 24, 26 are connected in parallel by being separately rigidly secured to the hub 12 and to the center member 14 as will be described in more detail later. Likewise, the second group of flexible elements 22 is made up of two separate flexible elements 28, 30 connected in parallel

Since the first group of flexible elements 20 is identical to the second group of flexible elements 22, it will be understood that any description of one group of flexible elements also describes the other group. However, the two groups of flexible elements 20, 22 need not be identical. For example, the second group 22 could be just a single flexible element which is rigidly secured to both the center member 14 and the second hub 16, or the second group 22 could comprise three flexing elements connected in parallel. Several combinations are possible. However, since the same torque is to be transmitted between the first hub 12 and the center member 14 as between the center member 14 and the second hub 16, it is preferable that the first and second group of flexing elements 20, 22 be the same.

Figure 2 more clearly shows the first hub 12, flexible elements 24 and 26, and a broken-away portion of the center member 14. It can be seen here that each flexible element 24, 26 is made up of several thin sheets of material which are laminated together. Some methods which can be used for laminating the sheets together are described in the Fredericks patent referred to earlier. In a laminated disc such as disc 24, the sheets which make up the disc 24 are connected to the hub 12 and to the center member 14 as a unit, so that all the sheets flex together. It is possible to separate the sheets from each other by washers or other spacers and still to connect the sheets to the hub and center member as a unit, so that the sheets flex together. This should be distinguished from a parallel coupling arrangement, which is described throughout this application, and in which the flexing elements are separately connected to the hub and center member so that they flex independently, rather than being connected as a unit.

It can also be seen in Figure 2 that the flexible elements 24 and 26 are identical to each other except that they have been rotated at an angle of 45$^{\circ}$ to each other. Each flexible element 24, 26 has a large central aperture 32 and four smaller apertures 34. The apertures 34 are all located an equal distance from the axis 18.

Referring now to Figure 3, it can be seen more clearly how the flexible elements 24, 26 are secured to the first hub 12 and the center member 14. Four bolts 36 are provided for attaching the flexible elements 24, 26 to the first hub 12. Likewise, four bolts 38 are provided for attaching the flexible elements 24, 26 to the center member 14. For the purposes of this description, the small apertures 34 of each flexible member 24, 26 have been numbered in clockwise order, beginning with 34(1) on flexible element 24 and with 34(5) on flexible element 26. Looking now at aperture 34(1) of flexible member 24, it can be seen that one of the bolts 36 passes through a small opening 40 in the flanged portion of first hub 12, through a short spacer 42, through aperture 34(1), through a second small spacer 42 and is fixed in place by a nut 44, which is threaded onto the bolt 36 so as to rigidly connect the flexible element 24 to the first hub 12. It should be noted that the opening 40 is smaller than the head of the bolt 36 and that a larger opening 41 is provided in center member 14 to aid in tightening the nut 44 onto its bolt 36. It is possible to secure the flexible elements 24, 26 by rivets or other known rigid connectors, but bolts are preferred for high torque applications.

Moving clockwise around the flexible element 24, it can be seen that the next aperture 34(2) is used for connecting the flexible element 24 to the center member 14. Specifically, a bolt 38 enters through a small opening 40 of the center member 14, bypasses the flexible member 26, enters a long spacer 46, enters aperture 34(2), passes through a small spacer 42, and is secured by means of a nut 44, thereby rigidly connecting the first flexible element 24 to the center member 14. The long spacer 46 is used in order to firmly secure the flexible element 24 to center member 14 while leaving enough space for the flexible element 26.

The next aperture in the flexible element 24 is aperture 34(3). A bolt 36 passes through a small opening 40 in the first hub 12 and secures the flexible element 24 to the hub 12 at aperture 34(3). Moving clockwise around flexible element 24 to aperture 34(4), it can be seen that aperture 34(4) is used to connect the flexible element 24 to the center member 14.

Thus, it can be seen that the connections between the flexible element 24 and the first hub 12 (at apertures 34(1) and 34(3)) angularly alternate with the connections between the flexible element 24 and the center member 14 (at apertures 34(2) and 34(4). Spacers 42, 46 of the proper length are used so that all the connections are rigid, regardless of the distance between the flexible element and the rigid member to which it is connected.

Moving now to the flexible element 26, it can be seen that aperture 34(5) is used to connect the flexible element 26 to the hub 12, by means of a bolt 38. Moving clockwise, the next aperture 34(6) is used to connect the flexible element 26 with the center member 14. Aperture 34(7) is used to connect the flexible element 26 to hub 12, and aperture 34(8) is used to connect the flexible element 26 to the center member 14. Again, it can be seen that the connections between the flexible element 26 and the first hub 12 (at apertures 34(5) and 34(7)) angularly alternate with the connections between the flexible element 26 and center member 14 (at apertures 34(6) and 34(8)).

It can be seen from Figure 3 that each flexible member 24, 26 is separately attached to the hub 12 and to the center member 14. That is, the bolt 36 which attaches the flexible member 24 to the hub 12 through the aperture 34(1) does not contact the flexible element 26, nor does it attach the flexible element 26 to any other member. Likewise, the bolt 38 which attaches the flexible element 24 to the center member 14 through aperture 34(2) bypasses the flexible element 26, due to the indentation in the outer edge of the flexible element 26.

When assembled, as shown in Figure 4, the group 20, consisting of the flexible elements 24 and 26, will transmit torsional load between the center member 14 and the hub 12. If the first hub 12 is acting as the driving member and the hub 16 as the driven member, torque will be transmitted from the first hub 12, through the flexible elements 24, 26, and then to the center member 14, which will then transmit torque through the second group of flexible elements to the second hub 16. If the second hub 16 is the driving member and the first hub 12 the driven member, torque will be transmitted from the center member 14 through the flexible elements 24, 26, to the first hub 12. Each flexible element 24, 26 will transmit half of the total torsional load transmitted by the group 20. Both angular and axial misalignment between the hub 12 and the center member 14 can be accommodated by the flexing of the flexible members 24 and 26. One angle of misalignment can be accommodated by the portion of the coupling shown in Figure 4, and the complete coupling, as shown in Figure 1, accommodates two angles of misalignment. This coupling is radially stable.

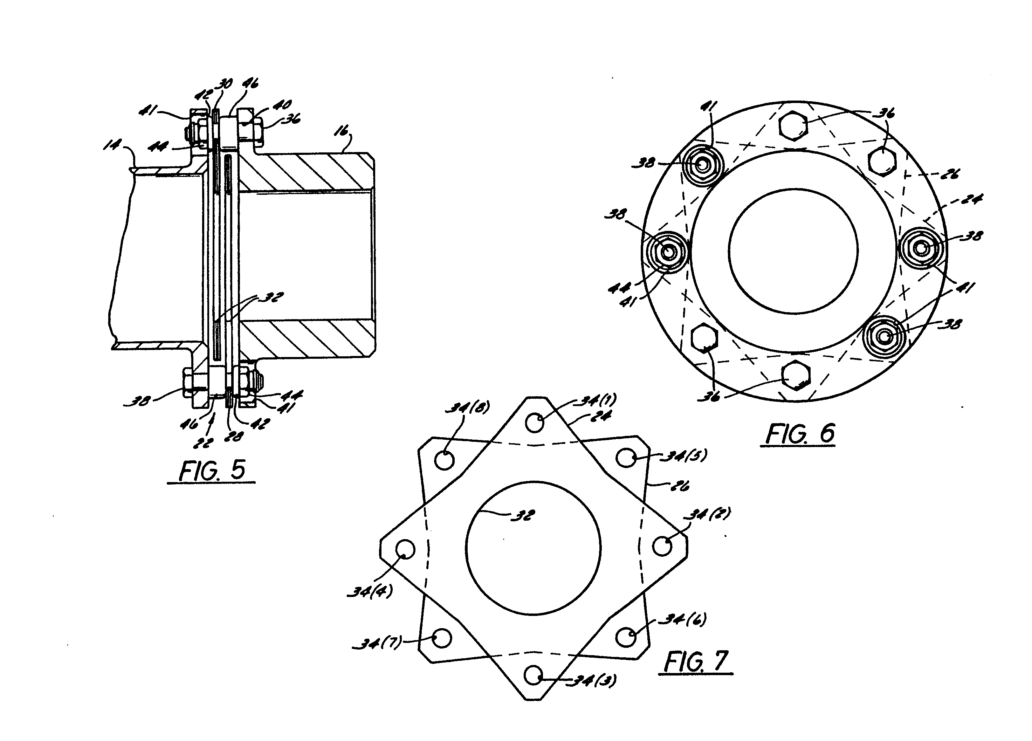

Figures 6 and 7 again illustrate the shape of the flexible elements 24 and 26 which permits them to be separately secured to their respective hub and center member.

A double-flexing coupling as shown in Figures 1 through 7 of this application was tested against a double-flexing coupling as shown in Figure 1 of the Fredericks patent cited earlier, and it was found that the coupling of this invention provided significantly greater misalignment (approximately 240% greater) than the coupling of the prior art for a given torque.

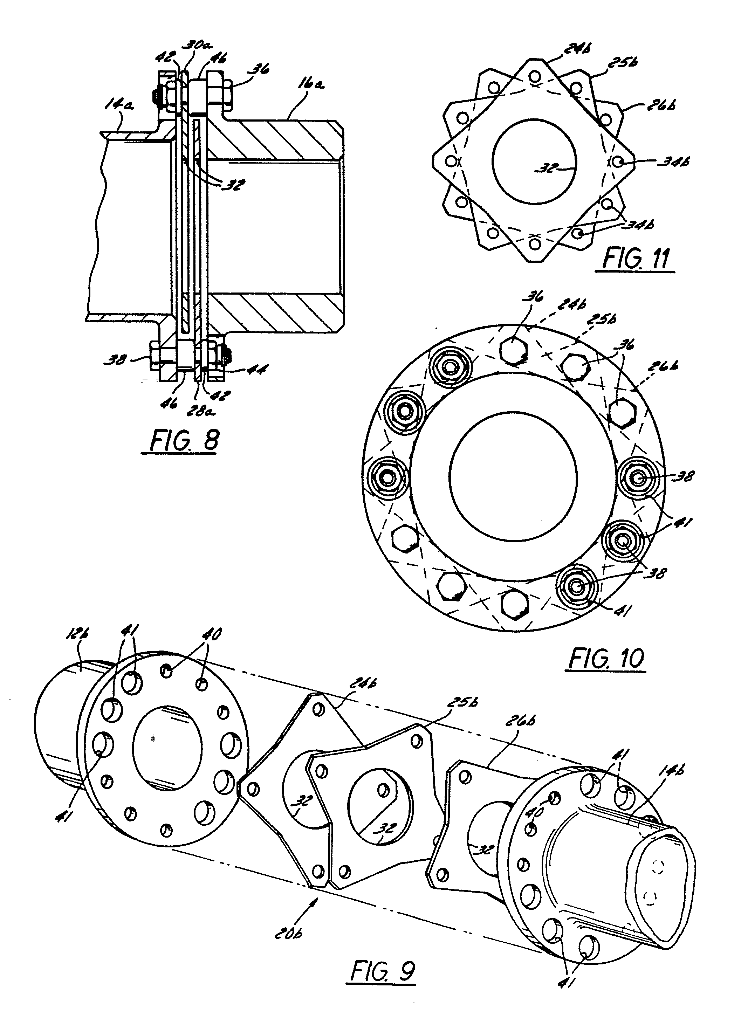

Figure 8 shows a part of a second embodiment of the present invention in which the center member 14a is flexibly connected to the second hub 16a by means of flexible elements 30a and 28a. The only difference between this embodiment and the first embodiment is that the flexible elements 28a and 30a are made of a solid piece of material rather than a plurality of laminated sheets.

Figures 9 through 11 illustrate the left half of a third embodiment in which the first hub 12b is flexibly attached to the center member 14b by a first group of flexible elements 20b. In this embodiment, the group 20b is made up of three flexible elements 24b, 25b, 26b, instead of the two flexible elements 24 and 26 shown in the first embodiment. In this case, each flexible element 24b, 25b, and 26b, carries one-third of the total torsional load transmitted between the first hub 12b and the center member 14b.

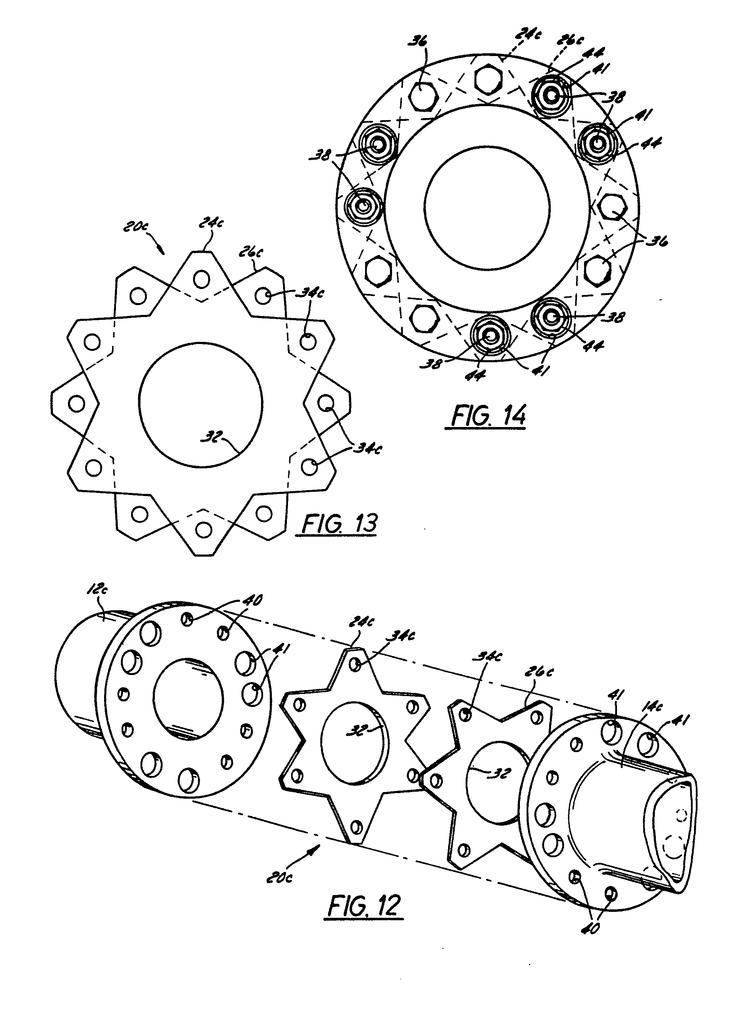

Figures 12, 13 and 14 illustrate a fourth embodiment of the present invention, in which a first hub 12c is flexibly connected to a center member 14c by means of a first group of flexible elements 20c. In this case, the first group of flexible elements 20c is made up of two flexible elements 24c and 26c. Each flexible element 24c and 26c has six small openings 34c as opposed to the four small openings shown in the prior embodiments. This means that each flexible element 24c, 26c has three connections to its hub 12c and three connections to its center member 14c instead of two connections. The purpose of increasing the number of bolt holes 34c is to enable the coupling to transmit greater torque. However, increasing the number of bolts decreases the spacing between bolts, thereby decreasing the amount of misalignment that can be accommodated by the coupling.

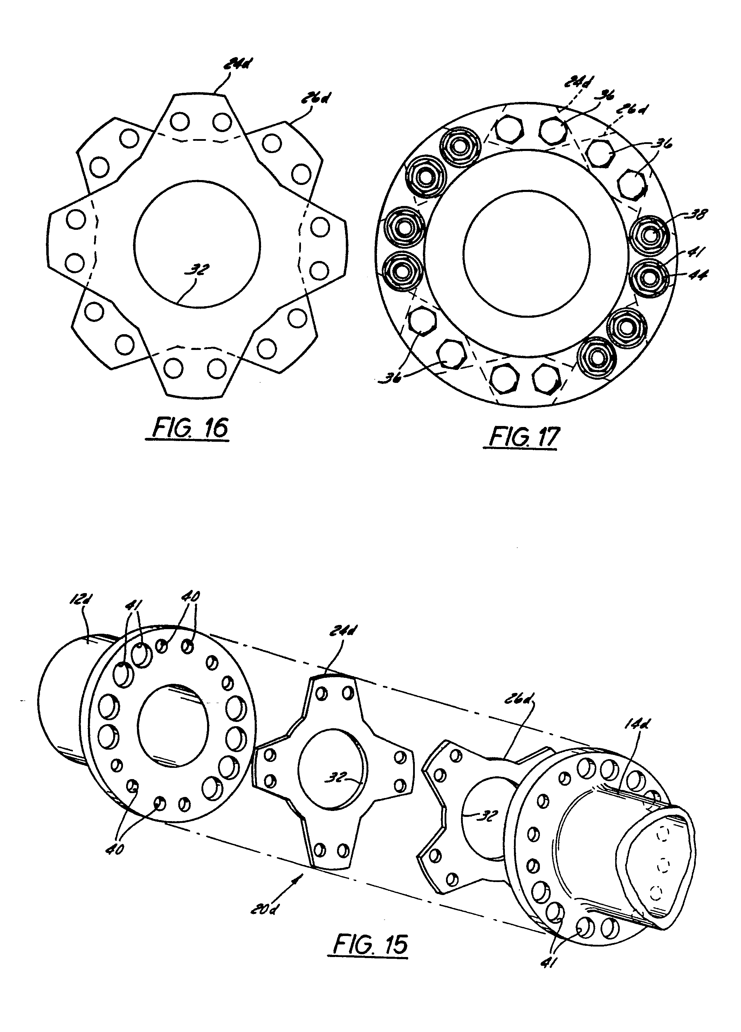

Figures 15, 16 and 17 illustrate a fifth embodiment of the present invention in which the first hub 12d is coupled to the center member 14d by means of flexible elements 24d, 26d. This embodiment illustrates a double bolting arrangement, in which two rigid connections replace each single connection of the first embodiment. This sort of arrangement would be used in cases in which greater torque must be transmitted between the hub and center member.

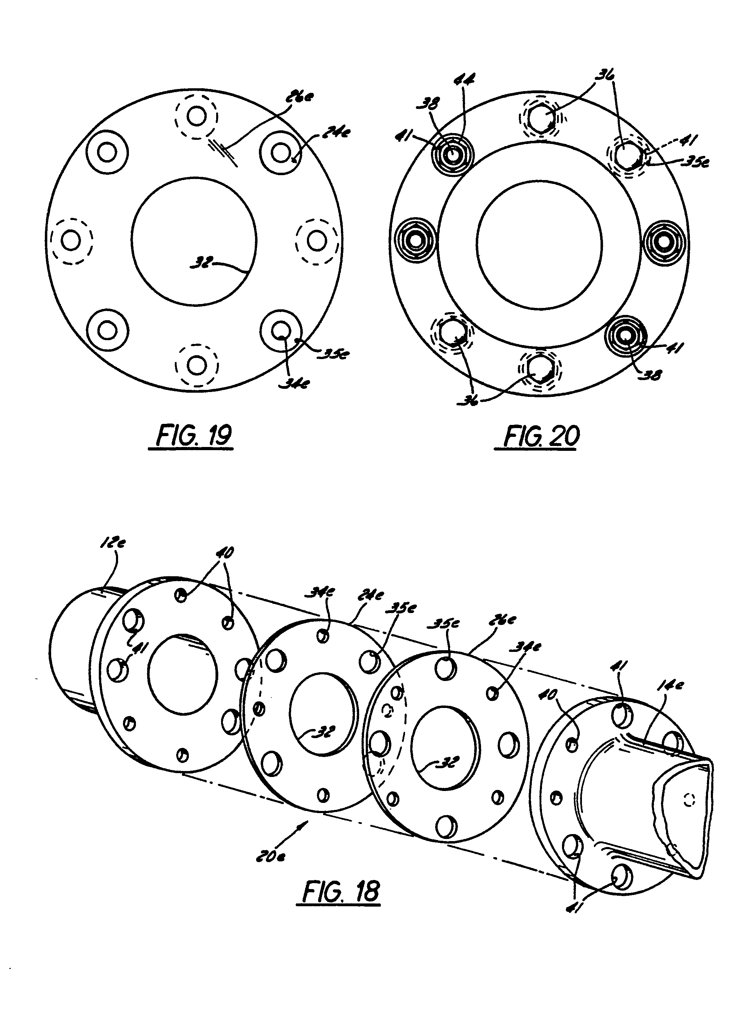

Figures 18, 19 and 20 illustrate a sixth embodiment of the present invention in which the first hub 12e is flexibly coupled to the center member 14e by means of flexible elements 24e and 26e. In this case, rather than shaping the outer edge of each disc 24e, 26e so that a bolt which secures one of the discs will bypass the other of the discs, the discs 24e, 26e have larger openings 35e alternating with the small openings 34e. Thus, a bolt which rigidly connects flexible element 24e to center member 14e will bypass flexible element 26e by passing through the larger opening 35e in flexible element 26e. Flexible elements 24e and 26e are separately connected as in the prior embodiments, with the only difference being the means by which the bolts which connect one flexible element bypass the other flexible element.

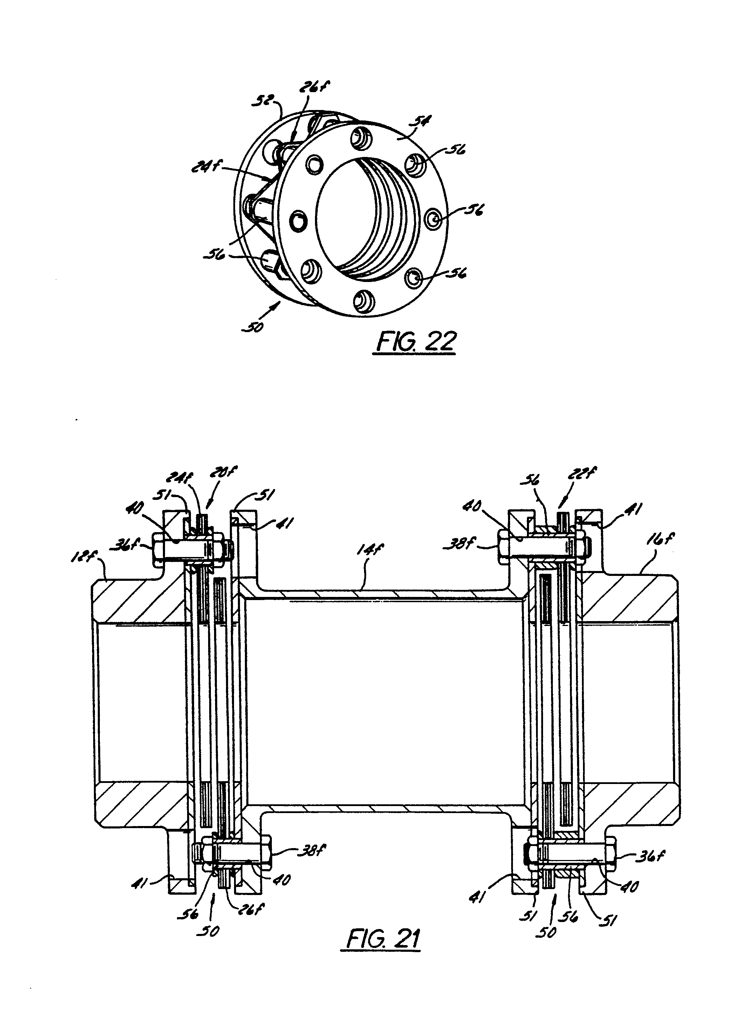

Figures 21 and 22 illustrate a seventh embodiment of the present invention, which is identical to the first embodiment except that each group of flexible elements 20f 22f is separately packaged in its own sandwich unit 50, for ease of assembly. These sandwich units are substantially the same as those shown in the Fredericks patent, which was earlier incorporated by reference, except for the parallel arrangement of the two flexible elements 20f, 22f. Each unit 50 includes two pilot rings 52, 54 with two flexible elements 24f, 26f between them. The sandwich unit 50 is held together by several fastening tubes 56 which are press fit into place. The coupling is made so that the outside edges of the pilot rings 52, 54 fit into lips 51. Bolts 36f, 38f are then inserted through the fastening tubes 56 for assembly of the coupling. The bolting arrangement of this embodiment is identical to that of the first embodiment.

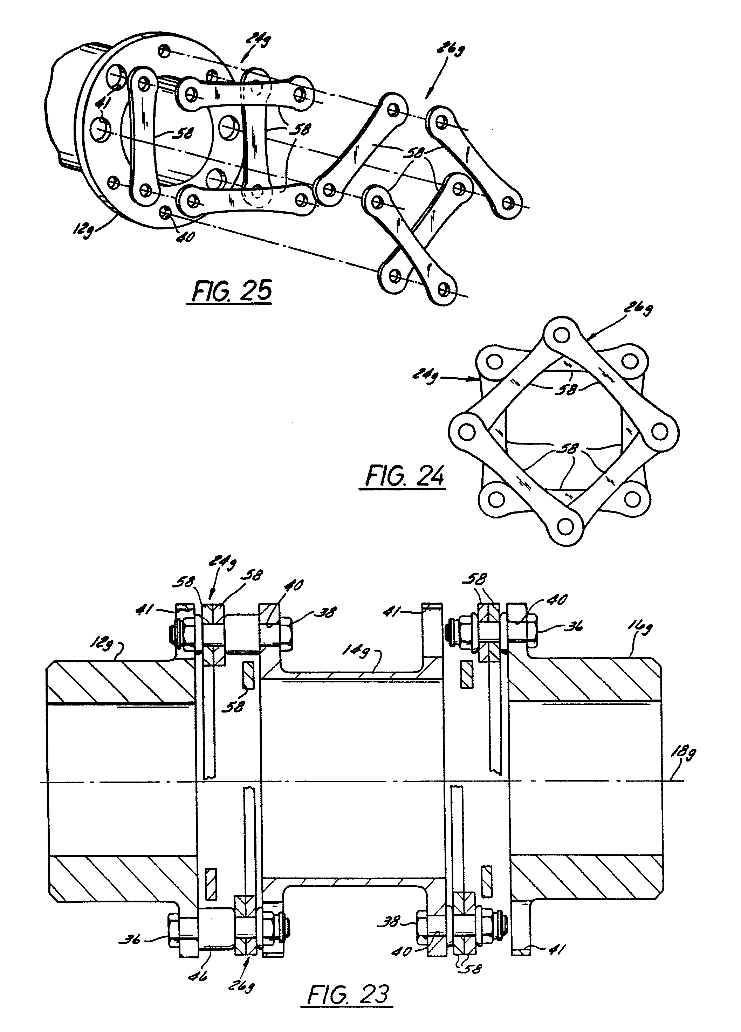

Figures 23, 24 and 25 illustrate an eighth embodiment of the present invention, in which each flexible element 24g, 26g is made up of four beams 58, the ends of which overlap so as to form a closed shape which is symmetrical about the longitudinal axis 18g. With the exception of the construction of the flexible elements 24g, 26g, this embodiment is identical to the first embodiment.

Several embodiments of the present invention have been described above. It should be obvious to one skilled in the art that many different modifications and combinations could be made within the scope of the present invention.

CLAIMS:

1.      A flexible torque transmission coupling, comprising:

a driving member (12), a rigid center member (14), and a driven member (16) aligned on a longitudinal axis (18); and

a plurality of flexible elements (24, 26, 28, 30) symmetrical about said longitudinal axis, wherein at least two of said flexible elements (24, 26) are coupled in parallel between said driving member and said center member, and at least one of said flexible elements (28) is coupled between said center member and said driven member.

2.      A flexible torque transmission coupling, comprising:

a driving member (12), a rigid center member (14), and a driven member (16) aligned on a longitudinal axis (18); and

a plurality of flexible members (24, 26, 28, 30) symmetrical about said longitudinal axis, wherein at least two of said flexible members (28, 30) are coupled in parallel between said driven member and said center member and at least one of said flexible members (24) is coupled between said center member and said driving member.

3.      A flexible torque transmission coupling, comprising:

a first hub (12), a rigid center member (14), and a second hub (16) aligned on a longitudinal axis (18); and

a plurality of flexible elements (24, 26, 28, 30) symmetrical about said longitudinal axis, wherein at least two flexible elements (24, 26) are separately rigidly secured to said first hub and to said rigid center member, so as to form a first group of flexible elements, and at least two flexible elements (28, 30) are separately rigidly secured to said second hub and to said center member, so as to form a second group of flexible elements,

such that each group of flexible elements can transmit torsional load between said center member and the group's respective hub, with each flexible element in the group transmitting an amount of torsional load which is less than the total torsional load transmitted by the group, and such that each group of flexible elements permits both angular and axial misalignment between its respective end member and the center member.

4. A flexible torque transmission coupling as recited in claim 3, wherein each flexible element has rigid connections to its hub (36) and rigid connections to the center member (38), wherein said rigid connections to its hub angularly alternate with said rigid connections to the center member, and wherein each flexible element has at least four rigid connections.

5. A flexible torque transmission coupling as recited in claim 4, wherein all the rigid connections between said flexible elements and said center member and between said flexible elements and their respective hub are spaced an equal radial distance from said axis.

6. A flexible torque transmission coupling as recited in claim 5, wherein each of said flexible elements comprises a plurality of laminated sheets.

7. A flexible torque transmission coupling as recited in claim 5, wherein each of said flexible elements comprises a single piece.

8. A flexible torque transmission coupling as recited in claim 5, wherein each of said flexible elements comprises a plurality of beams, wherein the end of each beam is secured to the end of the adjacent beam, such that the beams form a closed shape which is symmetrical about said longitudinal axis.

9. A flexible torque transmission coupling as recited in claim 6, 7 or 8, wherein each of said flexible elements is shaped so that the rigid connections of each flexible element of each group bypass the other flexible elements in the group.

10. A flexible torque transmission coupling as recited in claim 5, wherein each flexible element is connected to the center member in at least three locations and to its respective hub in at least three locations.

11. A flexible torque transmission coupling as recited in claim 3, wherein two rigid connections between each flexible element and its hub angularly alternate with two rigid connections between each flexible element and the center member, resulting in a double-bolted coupling.

12. A flexible torque transmission coupling as recited in claim 6, wherein each group of flexible elements is assembled in a sandwich unit between two pilot rings.

826300113.7
0082797

FIG. 2

FIG. 1

0082797

FIG. 3

FIG. 4

FIG. 5

FIG. 6

FIG. 7

0300113,7
0082797

0082797

FIG. 8

FIG. 11

FIG. 10

FIG. 9

FIG. 14

FIG. 13

FIG. 12

FIG. 16

FIG. 17

FIG. 15

8 2 6 3 0 0 1 1 3.7
0082797

FIG. 19

FIG. 20

FIG. 18

82650 0082797

FIG. 22

FIG. 21

FIG. 25

FIG. 24

FIG. 23